# EUROPEAN PATENT APPLICATION

(11) **EP 2 743 796 A2**
(43) Date of publication of application: **18.06.2014**
(21) Application number: 13194517.2
(22) Date of filing: 26.11.2013
(51) Int. Cl.: G06F 1/32

(54) **Electronic apparatus, method of controlling the same, and computer-readable recording medium**

(30) Priority: 11.12.2012 US 201261735685 P; 27.02.2013 KR 20130021446
(71) Applicant: Samsung Electronics Co., Ltd, Gyeonggi-do 443-742 (KR)
(72) Inventor: Lee, Dong-geun, Gyeonggi-do (KR)
(74) Representative: Taor, Simon Edward William

(57) **Abstract**

An electronic apparatus includes a physical button to be manipulated by a predetermined manipulation, a sensor to measure ambient illuminance when an operation mode of the electronic apparatus is a power saving mode or a power off mode and the physical button is manipulated, and a controller to perform an operation corresponding to the predetermined manipulation of the physical button when it is determined that the ambient illuminance measured by the sensor is greater than or equal to a predetermined illuminance value.

## Description

Methods and apparatuses consistent with exemplary embodiments of the present general inventive concept relate to an electronic apparatus, a method of controlling the same, and a computer-readable recording medium, and more particularly, to an electronic apparatus which can prevent a misoperation of a power button using ambient illuminance, a method of controlling the same, and a non-transitory computer-readable recording medium to contain computer-readable codes as a program to execute the method.

Computers are apparatuses that process a series of calculations implemented by a logic language, and are equipped with an operating system to operate a hardware system effectively. Many modem computers are equipped with a touch screen to enhance mobility, and slate PCs, tablet PCs and smart phones without a keyboard are being widely used in recent years.

Users may carry such electronic apparatuses in their bags or pockets. In this case, a power button of the electronic apparatus may be inadvertently pressed due to the movement of the user and thus an operation that the user does not intend to perform may be performed.

According to a related-art method of preventing such a misoperation of the power button, the power button is processed as being pressed when the button is pressed for a predetermined time. Also, a shape of the power button is changed so that it is not pressed inadvertently.

However, the method in which the power button is processed as being pressed only when the button is pressed for the predetermined time has problems in that it is difficult to understand the operation of the power button intuitively and thus the user may understand the method of operating the power button. Also, this method takes time to manipulate the button. Also, the method in which the shape of the button is changed still has the problem of misoperation of the button.

Features and utilities of the present general inventive concept may overcome the above disadvantages and other disadvantages not described above. However, it is understood that one or more exemplary embodiment of the present general inventive concept is not required to overcome the disadvantages described above, and may not overcome any of the problems described above.

One or more exemplary embodiments of the present general inventive concept provides an electronic apparatus which can prevent a misoperation of a power button using ambient illuminance, a method of controlling the same, and a computer-readable recording medium.

Additional features and utilities of the present general inventive concept will be set forth in part in the description which follows and, in part, will be obvious from the description, or may be learned by practice of the general inventive concept.

Exemplary embodiments of the present general inventive concept provide an electronic apparatus having a plurality of operation modes, the electronic apparatus including a physical button to be manipulated by a predetermined manipulation, a sensor to measure ambient illuminance when an operation mode of the electronic apparatus is a power saving mode or a power off mode and the physical button is manipulated, and a controller to perform an operation corresponding to the predetermined manipulation of the physical button when it is determined that the ambient illuminance measured by the sensor is greater than or equal to a predetermined illuminance value.

The electronic apparatus may further include a user interface to display a message requesting a confirmation of the manipulation of the physical button when it is determined that the ambient illuminance measured by the sensor is less than the predetermined illuminance value.

When the physical button is manipulated for a first predetermined time and it is determined that the ambient illuminance measured by the sensor for the first predetermined time is less than the predetermined illuminance value, the controller may control the user interface to display the message.

The user interface may display the message only for a second predetermined time.

When a user confirmation command is input after the message is displayed, the controller may perform the operation corresponding to the predetermined manipulation of the physical button.

The user confirmation command may be input through at least one of the manipulated physical button, a button other than the manipulated physical button, and a touch input of the user interface.

When the operation mode of the electronic apparatus is the power saving mode and the physical button is manipulated, and it is determined that the measured ambient illuminance is greater than or equal to the predetermined illuminance value, the controller may change the operation mode of the electronic apparatus to a normal mode.

The electronic apparatus may further include a plurality of functional elements including the sensor, and a power supply which supplies power to each of the plurality of functional elements. When the operation mode of the electronic apparatus is the power off mode and the physical button is manipulated, the controller may control the power supply to only supply power to the sensor, and, when it is determined that the measured ambient illuminance is greater than or equal to the predetermined illuminance value, the controller may control the power supply to supply power to all of the functional elements.

The plurality of functional elements may further include a user interface. When the physical button is manipulated for a first predetermined time and it is determined that the ambient illuminance measured by the sensor for the first predetermined time is less than the predetermined illuminance value, the controller mat control the power supply to supply power to the user interface.

When it is determined that the ambient illuminance measured by the sensor for a third predetermined time after the physical button has been manipulated is less than the predetermined illuminance value, the controller may control the operation mode of the electronic apparatus to change to the power off mode.

The physical button may be at least one of a power button to receive a power manipulation command, a volume control button to receive a volume control command, a home button to receive a screen display command, and a keyboard button to input text.

The physical button may be at least one of a push button and a slide button.

The electronic apparatus may be connectable with a docking apparatus. When the electronic apparatus is connected with the docking apparatus and the physical button is manipulated, the controller may control the sensor not to measure ambient illuminance and may directly perform the operation corresponding to the predetermined manipulation of the physical button.

Exemplary embodiments of the present general inventive concept provide an electronic apparatus having a plurality of operation modes, the electronic apparatus including a physical button to be manipulated by a predetermined manipulation, a sensor to measure ambient illuminance, a first controller to perform an operation corresponding to the manipulated physical button, and a second controller to control the sensor to measure ambient illuminance when an operation mode of the electronic apparatus is a power saving mode or a power off mode and the physical button is manipulated, and, when it is determined that the measured ambient illuminance is greater than or equal to a predetermined illuminance value, to control the first controller to perform the operation corresponding to the predetermined manipulation of the physical button.

The electronic apparatus may further include a power supply to supply power to each of the sensor and the first controller. When the operation mode of the electronic apparatus is the power off mode, the second controller may control the power supply not to supply power to the sensor and the first controller, and, when the operation mode of the electronic apparatus is the power off mode and the physical button is manipulated, the second controller may control the power supply to supply power to the sensor. When power is supplied to the sensor and it is determined that the measured ambient illuminance is greater than or equal to the predetermined illuminance value, the second controller may control the power supply to supply power to the first controller.

Exemplary embodiments of the present general inventive concept provide a method of controlling an electronic apparatus having a plurality of operation modes, the method including manipulating a physical button by a predetermined manipulation when an operation mode of the electronic apparatus is a power saving mode or a power off mode, measuring ambient illuminance when the physical button is manipulated, and performing an operation corresponding to the predetermined manipulation of the physical button when it is determined that the measured ambient illuminance is greater than or equal to a predetermined illuminance value.

The method may further include displaying a message to receive a confirmation on the manipulation of the physical button when it is determined that the measured ambient illuminance is less than the predetermined illuminance value.

Displaying the message may include displaying the message when the physical button is manipulated for a first predetermined time and it is determined that the ambient illuminance measured for the first predetermined time is less than the predetermined illuminance value.

Displaying the message may include displaying the message only for a second predetermined time.

Performing the operation corresponding to the predetermined manipulation of the physical button may include performing the operation corresponding to the predetermined manipulation of the physical button when a user confirmation command is input after the message is displayed.

The user confirmation command may be input through at least one of the manipulated physical button, a button other than the manipulated physical button, and a touch input of a user interface.

Performing the operation corresponding to the predetermined manipulation may include changing the operation mode of the electronic apparatus to a normal mode when the physical button in manipulated while the operation mode of the electronic apparatus is the power saving mode, and it is determined that the measured ambient illuminance is greater than or equal to the predetermined illuminance value.

The electronic apparatus may be connectable with a docking apparatus. The measuring may not measure the ambient illuminance when the electronic apparatus is connected with the docking apparatus, and performing the operation corresponding to the predetermined manipulation of the physical button may include directly performing the operation corresponding to the predetermined manipulation of the physical button when the electronic apparatus is connected with the docking apparatus and the physical button is manipulated.

A non-transitory computer-readable medium may contain computer-readable codes as a program to execute the method.

Exemplary embodiments of the present general inventive concept provide an electronic apparatus, the electronic apparatus including a physical button to be manipulated, a sensor to detect ambient illuminance upon a manipulation of the physical button, and a controller to perform an operation corresponding to the manipulation of the physical button when the detected ambient illuminance is above a predetermined level, to request a user confirmation of the manipulation of the physical button when the detected ambient illuminance is below the predetermined level, and to perform the operation corresponding to the manipulation of the physical button when the user confirmation is received.

Exemplary embodiments of the present general inventive concept provide a method of controlling an electronic apparatus, the method including detecting ambient illuminance in response to a manipulation of a physical button thereof, performing an operation corresponding to the manipulation of the physical button if the detected ambient illuminance is above a predetermined level, requesting a user confirmation of the manipulation of the physical button if the detected ambient illuminance is below the predetermined level, and performing the operation corresponding to the manipulation of the physical button when the user confirmation is received.

According to an aspect of the invention, there is an electronic apparatus as set out in claim 1. Preferred features of this aspect are set out in claims 2 to 13.

According to an aspect of the invention, there is provided a method of controlling an electronic apparatus as set out in claim 14. Preferred features of this aspect are set out in claim 15.

These and/or other features and utilities of the present general inventive concept will become apparent and more readily appreciated from the following description of the embodiments, taken in conjunction with the accompanying drawings of which:
FIG. 1 is a view illustrating an electronic system according to an exemplary embodiment of the present general inventive concept;
FIG. 2 is a view illustrating a detailed configuration of an electronic apparatus of FIG. 1;
FIG. 3 is a view illustrating a schematic circuit of the electronic apparatus according to an exemplary embodiment of the present general inventive concept;
FIGS. 4 and 5 are views illustrating detailed shapes of a physical button illustrated in

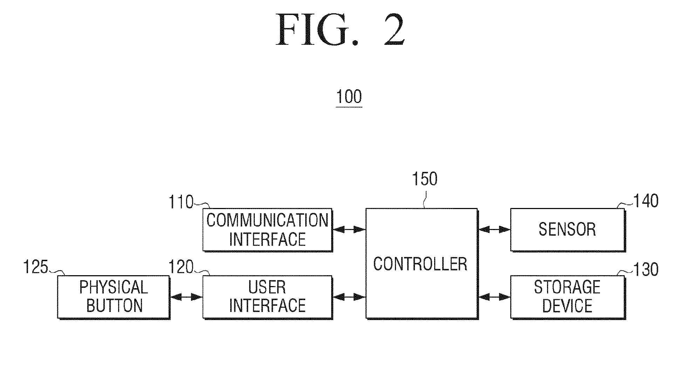

FIG. 2, according to exemplary embodiments of the present general inventive concept;

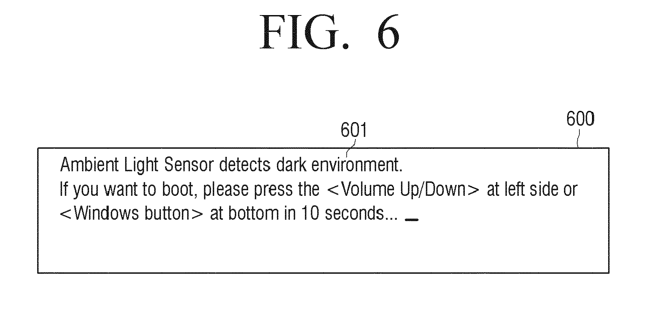

FIG. 6 is a view illustrating an example of a user interface window which is displayable on a user interface of FIG. 2;

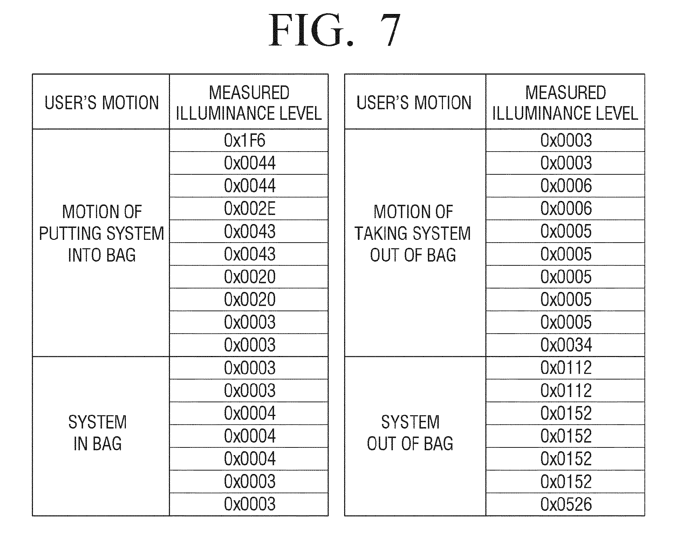

FIG. 7 is a view illustrating illuminance values which are measured according to a location of the electronic apparatus;

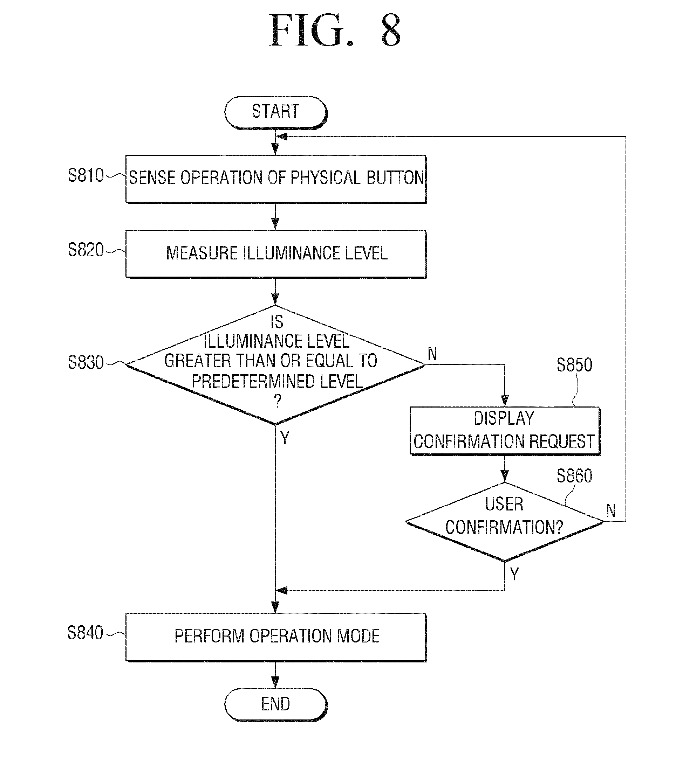

FIG. 8 is a flowchart illustrating a method of controlling an electronic apparatus according to an exemplary embodiment of the present general inventive concept; and

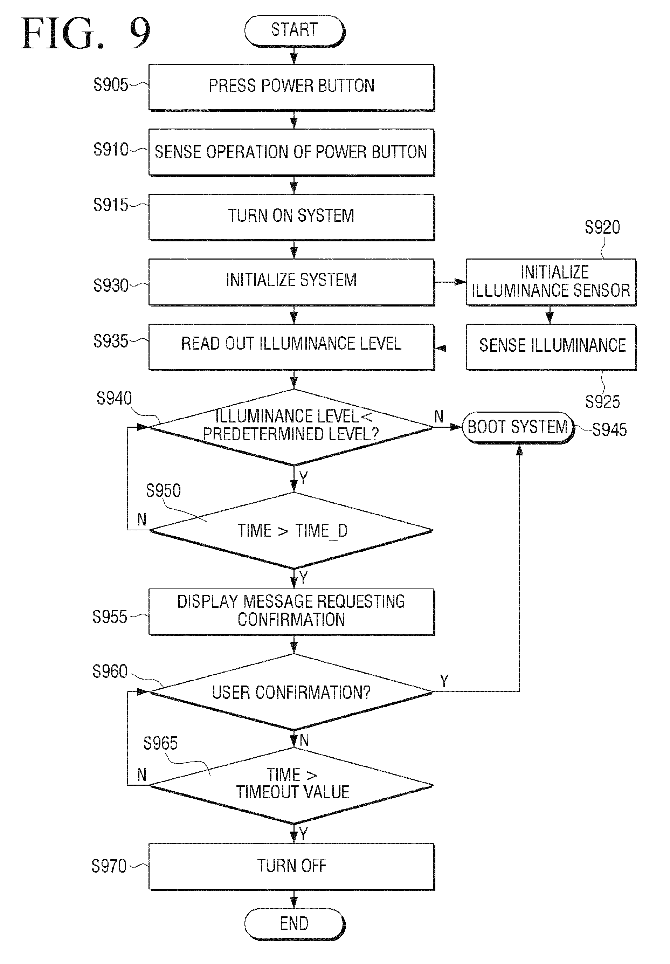

FIG. 9 is a flowchart illustrating a method of controlling an electronic apparatus according to an exemplary embodiment of the present general inventive concept if a physical button operated by predetermined manipulation is a power button.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

The matters defined in the description, such as detailed construction and elements, are provided to assist in a comprehensive understanding of exemplary embodiments of the present general inventive concept. Thus, it is apparent that exemplary embodiments can be carried out without those specifically defined matters. Also, functions or elements known in the related art are not described in detail since they would obscure the exemplary embodiments with unnecessary detail.

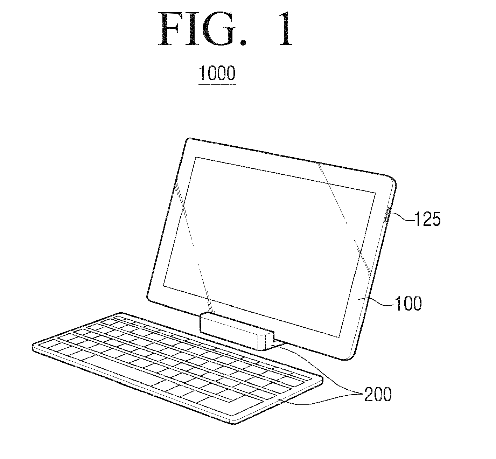

FIG. 1 is a view to explain an electronic system according to an exemplary embodiment of the present general inventive concept.

Referring to FIG. 1, an electronic system 1000 includes an electronic apparatus 100 and a docking apparatus 200.

The electronic apparatus 100 receives a driving command from a user and performs a job according to the received driving command. The electronic apparatus 100 may be physically and/or electrically connected with the docking apparatus 200. The electronic apparatus 100 may be a personal computer (PC), a mobile phone, a smart-phone, a portable multimedia player (PMP), or an MP3.

The electronic apparatus 100 has a plurality of operation modes. According to an operation state of the electronic apparatus 100, the operation mode includes a normal mode in which power is supplied to all elements and the electronic apparatus 100 is normally operated, and a power saving mode in which the electronic apparatus 100 is in a standby state. According to a connection state of the electronic apparatus 100, the operation mode includes a desk mode in which the electronic apparatus 100 is operated with the docking apparatus 200 being connected thereto, and a tablet mode in which the electronic apparatus 100 is operated without being connected with the docking apparatus 200.

The electronic apparatus 100 includes a physical button 125 which is operated by a predetermined manipulation. When the operation mode of the electronic apparatus 100 is the power saving mode, and the physical button 125 is manipulated, the electronic apparatus 100 measures ambient illuminance (ambient light level) with a sensor 140 (illustrated in FIG. 2) and performs an operation corresponding to the predetermined manipulation of the physical button 125 if the measured ambient illuminance is greater than or equal to a predetermined illuminance value. Detailed operations and configuration of the electronic apparatus 100 will be explained below with reference to FIG. 2.

The docking apparatus 200 extends functions of the electronic apparatus 100. The docking apparatus 200 may operate by itself or may operate only when the electronic apparatus 100 is mounted thereon. Specifically, the docking apparatus 200 may extend a user interface function of the electronic apparatus 100. For example, the docking apparatus 200 may extend an input function using a keyboard or a touch pad (not illustrated) provided therein, and may extend a display function through an external display apparatus (not illustrated) connected to the docking apparatus 200.

The docking apparatus 200 may include a graphic processing apparatus (not illustrated) which may extend a graphic processing function of the electronic apparatus 100. Also, the docking apparatus 200 may supply power to the electronic apparatus 100. The docking apparatus 200 may extend a storage space of the electronic apparatus 100. In the exemplary embodiment of the present general inventive concept illustrated in FIG. 1, it is assumed that the docking apparatus 200 does not operate by itself. However, the docking apparatus 200 may be implemented by using an apparatus that operates by itself in practice.

As described above, when the physical button 125 is manipulated, the electronic system 1000 according to an exemplary embodiment of the present general inventive concept verifies whether the manipulation of the physical button 125 is user manipulation or not using an ambient illuminance value, and thus can prevent a misoperation of the physical button 125.

FIG. 2 is a view illustrating a detailed configuration of the electronic apparatus 100 of FIG. 1.

Referring to FIG. 2, the electronic apparatus 100 according to an exemplary embodiment of the present general inventive concept includes a communication interface 110, a user interface 120, a physical button 125, a storage device 130, a sensor 140, and a controller 150. The electronic apparatus 100 may be for example a notebook PC, a tablet PC, an MP3 player, a portable multimedia player (PMP), or a smart-phone.

The electronic apparatus 100 includes a plurality of operation modes. According to an operation state of the electronic apparatus 100, a plurality of operations of the electronic apparatus 100 may be divided into a normal mode in which the electronic apparatus 100 is normally operated, and a power saving mode in which a power supply to most of the elements of the electronic apparatus 100 is shut off or minimized so that the power consumed is minimized.

The power saving mode refers to a mode in which the power supply to most of the elements of the electronic apparatus 100 is shut off or minimized so that the power consumed is minimized when the electronic apparatus 100 does not perform any job or the user does not input any job command for a predetermined time. In the power saving mode, power supply to a main memory (not illustrated; generally, an external DRAM) may be shut off or the main memory is set in a self-refresh state, so that consumption of standby power can be further reduced.

Although one power saving mode exists in the present exemplary embodiment of the present general inventive concept, the power saving mode may include a plurality of power saving modes in practice. The plurality of power saving modes may include a power off mode in which power supply to all of the elements in the electronic apparatus 100 is shut off. Although the power off mode is included in the power saving mode in the present exemplary embodiment of the present general inventive concept, the power off mode and the power saving mode may be separate modes.

According to whether the electronic apparatus 100 is connected with the docking apparatus 200, the plurality of operation modes may be divided into a tablet mode in which the electronic apparatus 100 is operated without being connected to the docking apparatus 200, and a desk mode in which the electronic apparatus 100 is operated with the docking apparatus 200 being connected thereto.

The tablet mode is a mode in which the electronic apparatus 100 is not connected with the docking apparatus 200, that is, is a mode in which the user holds the electronic apparatus 100 or carries it. When the physical button 125 is manipulated, the electronic apparatus 100 may measure ambient illuminance with the sensor 140 and may verify whether the manipulation of the physical button 125 is user manipulation or not.

The desk mode is a mode in which the electronic apparatus 100 is connected with the docking apparatus 200, that is, is a mode in which the electronic apparatus 100 is operated at a fixed location. Therefore, there is no doubt that the physical button 125 is not operated by any manipulation other than user manipulation. Accordingly, when the physical button 125 is manipulated in such a desk mode, the electronic apparatus 100 may directly perform the operation corresponding to the predetermined manipulation of the physical button 125 without measuring ambient illuminance.

The communication interface 110 is configured to connect the electronic apparatus 100 to an external apparatus (not illustrated), and may access the external apparatus through a local area network (LAN) and the Internet, and also, may access the external apparatus through a wireless communication method (for example, wireless communications such as GSM, UMTS, LTE, and WiBRO).

The communication interface 110 may communicate with the docking apparatus 200. Specifically, when the electronic apparatus 100 is connected to the docking apparatus 200, the communication interface 110 may receive a user control command from the docking apparatus 200, and may transmit an image (or a moving image) to be displayed to the docking apparatus 200. The communication interface 110 may be connected to an external apparatus (not illustrated) or the Internet through the docking apparatus 200.

The user interface 120 may include a plurality of functions keys (not illustrated) through which the user sets or selects various functions supported by the electronic apparatus 100, and may display a variety of information provided by the electronic apparatus 100. The user interface 120 may be implemented by using an apparatus performing input and output simultaneously such as a touch screen (not illustrated).

The user interface 120 may receive selection of an operation of a specific function through the physical button 125. Although the physical button 125 and the user interface 120 are separated from each other in the present exemplary embodiment of the present general inventive concept for the sake of easy explanation, the physical button 125 and the user interface 120 may be integrated into one element.

The user interface 120 may control a variety of information provided by the electronic apparatus 100 to be displayed on the docking apparatus 200 through the communication interface 110. Specifically, when the electronic apparatus 100 is connected with the docking apparatus 200, the user interface 120 may control the communication interface 110 to display a user interface window to be displayed on the electronic apparatus 100 on the docking apparatus 200.

When the electronic apparatus 100 is connected with the docking apparatus 200, the user interface window is displayed only on the docking apparatus 200 in the present exemplary embodiment. However, when the electronic apparatus 100 is connected with the docking apparatus 200, the electronic apparatus 100 and the docking apparatus 200 may be operated in a dual display form.

Also, when the electronic apparatus 100 is connected with the docking apparatus 200, the user interface 120 may display information indicating that the electronic apparatus 100 is connected with the docking apparatus 200.

The user interface 120 may display a message 601 (illustrated in FIG. 6) to receive a confirmation on manipulation of the physical button 125. Specifically, when the operation mode of the electronic apparatus 100 is the power saving mode, and the physical button 125 is manipulated, a message 601 to receive a confirmation on whether the manipulation of the physical button 125 is user manipulation or not may be displayed if ambient illuminance measured by the sensor 140, which will be described later, is less than a predetermined value. An example of the user interface window 600 displayed in this case is illustrated in FIG. 6, discussed later.

In the above exemplary embodiment, the message 601 is displayed directly if the ambient illuminance measured at the manipulating time of the physical button 125 is less than the predetermined value. Alternatively, the message 601 may be displayed if ambient illuminance measured for a predetermined time from the manipulating time of the physical button 125 continues to be less than the predetermined value. This situation may occur when, for example, the user presses the button when taking out the electronic apparatus 100 from his/her bag. Therefore, if an average value or greatest value of ambient illuminance measured for a predetermined time is less than the predetermined value, the message 601 may be displayed.

Also, the message 601 may be displayed if the physical button 125 continues to be manipulated for a predetermined time. That is, the message 601 may be set to be displayed if the physical button 125 continues to be manipulated for a predetermined time, so that the message 601 is not displayed if the physical button 125 is temporarily manipulated for example due to the movement of the electronic apparatus in the bag.

Also, the message 601 may be displayed only if the above-described additional conditions are satisfied. That is, if the physical button 125 is manipulated for a predetermined time and the ambient illuminance measured for the predetermined time (or for a time shorter or longer than the predetermined time) continues to be less than a predetermined illuminance value, the message 601 may be displayed.

The message 601 may be displayed only for a predetermined time (for example, 20 seconds). Also, the message 601 may be displayed only in the tablet mode. That is, since the physical button 125 is less likely to be misoperated when the electronic apparatus 100 is connected with the docking apparatus 200, the message 601 may be displayed only in the tablet mode and may not be displayed in the desk mode.

The user interface 120 receives a user confirmation command. Specifically, the user interface 120 may receive a user confirmation command after displaying the message 601 to receive the user confirmation command. The user confirmation command may be input through a touch screen (not illustrated), the physical button 125 which is initially manipulated, or may be input through a different physical button (not illustrated) other than the initially manipulated physical button 125.

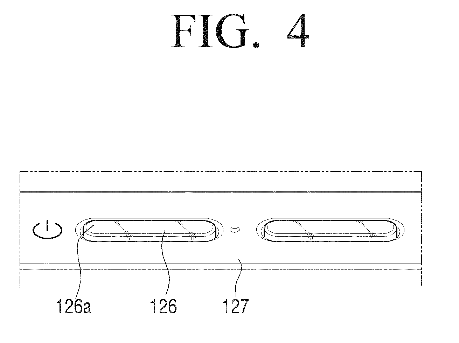

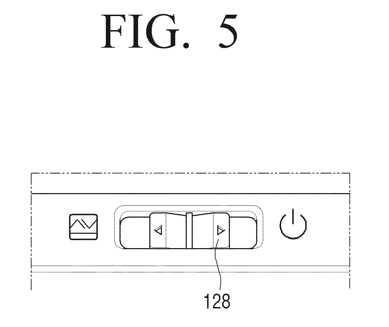

The physical button 125 is operated by predetermined manipulation. Hereinafter, the physical button 125 is referred to as a single button for the sake of easy explanation, but in practice, the physical button 125 may include a plurality of physical buttons. The physical button 125 may be a push button 126 as illustrated in FIG. 4 or may be a slide button 128 as illustrated in FIG. 5. The physical button 125 may be for example a power button to receive a power manipulation command, a volume control button to receive a volume control command, a home button to receive a screen display command, or a keyboard button to input text.

The storage device 130 stores a program to drive the electronic apparatus 100. Specifically, the storage device 130 may store a program that is a set of commands necessary to drive the electronic apparatus 100. The program may include an application to provide a specific service and an operating program to drive the application.

The storage device 130 may be implemented by using an internal storage medium or an external storage medium of the electronic apparatus 100, such as a removable disk including a USB memory and a web server through a network.

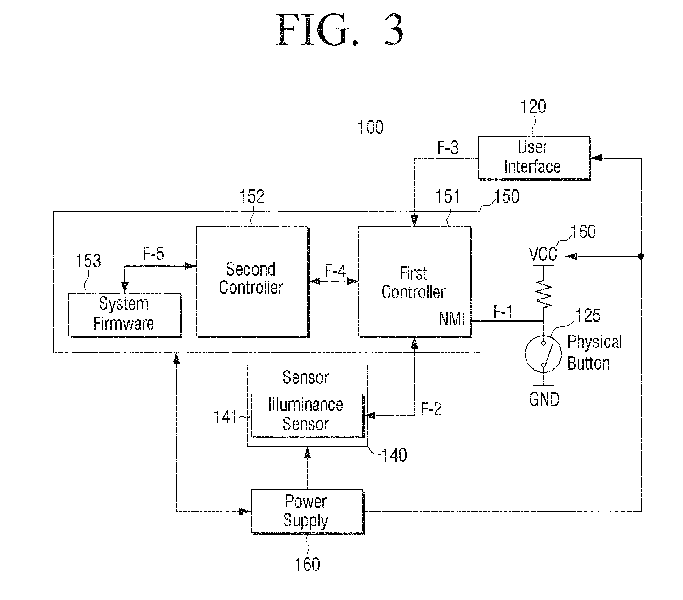

The sensor 140 measures ambient illuminance. Specifically, the sensor 140 includes an illuminance sensor (141, illustrated in FIG. 3) to measure illuminance, and measures ambient illuminance using the illuminance sensor 141 when the operation mode of the electronic apparatus 100 is the power saving mode (or the power off mode) and the physical button 125 is manipulated. The ambient illuminance may be measured continuously for a predetermined time from the time when the physical button 125 is manipulated. The predetermined time may be a time from when the physical button 125 is manipulated to when a confirmation on whether the manipulation of the physical button 125 is user manipulation or misoperation is received, or may be a period of time which is set as default (for example, about 1 or 2 seconds). The period of time which is set as default will be explained below with reference to FIG. 7.

The sensor 140 may measure the illuminance (that is, measures the illuminance in response to the operation of the physical button 125) only in the tablet mode. That is, since the physical button 125 is less likely to be misoperated when the electronic apparatus 100 is connected with the docking apparatus 200, the ambient illuminance may be measured in response to the manipulation of the physical button 125 only in the tablet mode and may not be measured in the desk mode.

The controller 150 controls the elements of the electronic apparatus 100. Specifically, the controller 150 may sense whether the electronic apparatus 100 is mounted on the docking apparatus 200 or not. For example, the electronic apparatus 100 may include a connector to be physically/electrically connected with the docking apparatus 200. When the docking apparatus 200 is electrically connected with the connector, the controller 150 may sense that the electronic apparatus 100 is mounted on the docking apparatus 200. Also, when adaptor power is input through the docking apparatus 200, the controller 150 may sense whether the electronic apparatus 100 is mounted on the docking apparatus 200 or not based on whether the adaptor power is input or not.

The controller 150 determines an operation mode of the electronic apparatus 100 according to whether the electronic apparatus 100 is mounted on the docking apparatus 200. More specifically, when the electronic apparatus 100 is mounted on the docking apparatus 200, the controller 150 determines the operation mode of the electronic apparatus 100 to be the desk mode, and, when the electronic apparatus 100 is not mounted on the docking apparatus 200, the controller 150 determines the operation mode of the electronic apparatus 100 to be the tablet mode.

The controller 150 may determine whether to change the operation mode of the electronic apparatus 100. Specifically, when the electronic apparatus 100 is mounted on the docking apparatus 200 in the tablet mode as described above, the controller 150 may determine to change the operation mode of the electronic apparatus 100 to the desk mode. On the other hand, when the electronic apparatus 100 is dismounted from the docking apparatus 200 in the desk mode or when a dismounting command is input through the user in the desk mode, the controller 150 may determine to change the operation mode of the electronic apparatus 100 to the tablet mode.

The controller 150 may change the operation mode of the electronic apparatus 100 from the normal mode to the power saving mode when a predetermined condition is satisfied. For example, the predetermined condition may refer to a case in which no command is input for a predetermined time. However, this is merely an example and there are various cases in the mode change event.

The controller 150 may change the operation mode from the power saving mode to the normal mode when a predetermined condition is satisfied. For example, when the physical button 125 is manipulated as described above, the controller 150 may change the operation mode of the electronic apparatus 100 from the power saving mode to the normal mode.

When the operation mode of the electronic apparatus 100 is the tablet mode and the power saving mode, the controller 150 may control the sensor 140 to measure ambient illuminance in response to manipulation of the physical button 125. The controller 150 may control the sensor 140 to continue measuring the ambient illuminance for a predetermined time (for example, 1.2 seconds).

The controller 150 may perform an operation corresponding to the predetermined manipulation of the physical button 125 only if the ambient illuminance measured by the sensor 140 is greater than or equal to a predetermined illuminance value. For example, in the case that the physical button 125 corresponds to a power button of the electronic apparatus 100, when the physical button 125 is manipulated in the power saving mode and it is determined that the input of the physical button 125 is user manipulation, the controller 150 may change the operation mode of the electronic apparatus 100 from the power saving mode or the power off mode to the normal mode. As another example, in the case that the physical button 125 corresponds to a volume control button of the electronic apparatus 100, when the physical button 125 is input in the power saving mode and it is determined that the input of the physical button 125 is user manipulation, the controller 150 may control an output volume of the electronic apparatus 100.

On the other hand, if the ambient illuminance measured by the sensor 140 is less than the predetermined illuminance value, the controller 150 may not perform the operation corresponding to the manipulation of the physical button 125. However, when the physical button 125 is manipulated for a predetermined time, the controller 150 may control the user interface 120 to display a message 601 to receive a confirmation on the manipulation of the physical button 125. In this case, the controller 150 may control the user interface 120 to display the message 601 only for a predetermined time. Although a user confirmation is required only when the physical button 125 is manipulated for the predetermined time, the user confirmation may be required regardless of how long the physical button 125 is manipulated in practice.

When a user confirmation command is input through the user interface 120 or the physical button 125 in the state in which such a message 601 is displayed, the controller 150 may perform the operation corresponding to the manipulation of the physical button 125. On the other hand, when a user confirmation command is not input for a predetermined time during which the message 601 is displayed, the controller 150 may control the user interface 120 to stop displaying the message 601.

When the above-described operation (that is, the operation of determining whether the manipulation of the physical button 125 is misoperation or not) is performed in response to the manipulation of the power button, the controller 150 may determine whether the ambient illuminance is greater than or equal to the predetermined value to determine whether the manipulation of the physical button 125 is misoperation or not, and simultaneously, may perform some of the operations of changing the power saving mode to the normal mode in advance. Specifically, the controller 150 may perform some operation such as controlling a power supply 160 (illustrated in FIG. 3) to supply power to the elements of the electronic apparatus 100 or initializing from among a series of booting operations or a series of operation mode changing operations (that is, a POST process prior to booting with an operating system) in order to boot or change the operation mode swiftly in response to the manipulation of the power button.

When it is determined that the manipulation of the physical button 125 is user manipulation while such a booting operation and an operation mode changing operation are performed, the controller 150 may perform remaining booting operation and operation mode changing operation. On the other hand, when it is determined that the manipulation of the physical button 125 is misoperation while the booting operation and the operation mode changing operation are performed, the controller 150 may stop performing the booting operation and the operation mode changing operation and may return to the original state. The operation of the controller 150 depending on the operation of the physical button 125 will be explained below in detail with reference to FIG. 9.

The controller 150 may control a power state of each of the elements of the electronic apparatus 100 according to the determined operation mode. Specifically, when the operation mode is determined to be the normal mode, the controller 150 may control the power supply 160 to supply power to all of the necessary elements, and, when the operation mode is determined to be the power saving mode, the controller 150 may control the power supply 160 to supply power only to some elements. This operation will be explained in detail with reference to FIG. 3.

When a user manipulation command is received, the controller 150 may perform a function corresponding to the received user manipulation command. Specifically, when a user manipulation command is received in the normal mode, the controller 150 may control each element of the electronic apparatus 100 to perform a function corresponding to the received user manipulation command.

On the other hand, when a user manipulation command is received in the power saving mode, the controller 150 may determine whether the user manipulation command is appropriate or not and may determine whether it is necessary to change the operation mode in order to perform a function corresponding to the user manipulation. For example, when the physical button 125 corresponding to a volume control button is manipulated while the electronic apparatus 100 is in the power saving mode in which the power supply to the user interface window 600 is shut off and a music file is reproduced, the controller 150 determines whether the manipulation of the physical button 125 is appropriate or not. When it is determined that the user manipulation of the physical button 125 is appropriate, the controller 150 may control the volume according to the user manipulation of the physical button 125 without changing the operation mode of the electronic apparatus 100.

According to the exemplary embodiment described above, when the physical button 125 is manipulated, the electronic apparatus 100 verifies whether the manipulation of the physical button 125 is user manipulation or not by using the ambient illuminance, and thus the electronic apparatus 100 can prevent misoperation of the physical button 125. Specifically, the electronic apparatus 100 according to the present exemplary embodiment determines whether the manipulation of the physical button 125 is misoperation or not using the ambient illuminance. That is, since the physical button 125 does not need to be manipulated for more than a predetermined time to perform a function, a power button may be used in the same way as general buttons. This improves the user's convenience and the power button has no limit to its design and thus may be expressed in various ways.

FIG. 3 is a view schematically illustrating a circuit of the electronic apparatus 100 according to an exemplary embodiment of the present general inventive concept.

Referring to FIG. 3, the electronic apparatus 100 includes a physical button 125 corresponding to a power button, a sensor 140 including an illuminance sensor 141, a controller 150, and a power supply 160. The controller 150 includes a plurality of controllers 151 and 152, corresponding to first and second controllers, respectively, and a system firmware 153.

The physical button 125 connects the power supply 160 to the electronic apparatus 100. In the exemplary embodiment of the present general inventive concept illustrated in FIG. 3, the power supply 160 corresponds to a VCC and a GND which are connected to each other according to predetermined manipulation of the physical button 125. The physical button 125 then informs the first controller 151 that the physical button 125 is operated.

The first controller 151 may control a power state of each element of the electronic apparatus 100 according to an operation mode of the electronic apparatus 100. Specifically, when the operation mode of the electronic apparatus 100 is the normal mode, the first controller 151 may control the power supply 160 through connection F-1 to supply power to all of the elements of the electronic apparatus 100.

Also, when the operation mode of the electronic apparatus 100 is the power saving mode, the first controller 151 may control the power supply 160 to supply power only to some of the elements. When the physical button 125 is operated while the operation mode of the electronic apparatus 100 is the power saving mode, the first controller 151 may control the power supply 160 to supply power to one or more elements (for example, the sensor 140 through connection F-2 and the user interface 120 through connection F-3) to determine whether the manipulation of the physical button 125 is a misoperation or not.

The first controller 151 determines an operation state of the physical button 125. Specifically, when an NMI pin (not illustrated) of the physical button 125 is grounded, the first controller 151 may determine that the physical button 125 is manipulated. The first controller 151 may be for example a main board chipset or an embedded controller.

When the physical button 125 is manipulated while the operation mode of the electronic apparatus 100 is the power saving mode, the first controller 151 may control the power supply 160 through connection F-1 to supply power to the sensor 140. When the power is supplied to the sensor 140, the first controller 151 initializes the illuminance sensor 141 of the sensor 140 and controls the illuminance sensor 141 to measure an ambient illuminance value. Although the first controller 151 is operated in the power saving mode in the exemplary embodiment of the present general inventive concept illustrated in FIG. 3, the first controller 151 may alternatively not be operated in the power saving mode and may start to be operated in response to manipulation of the physical button 125.

If the measured ambient illuminance value is greater than or equal to a predetermined value, the first controller 151 may control the power supply 160 and the second controller 152 to change the operation mode of the electronic apparatus 100 from the power saving mode to the normal mode.

If it is necessary to have a user confirmation since the measured ambient illuminance value is less than the predetermined value, the first controller 151 may control the power supply 160 to supply power to the user interface 120, and may control the user interface 120 to display a message 601 to receive a user confirmation of the manipulation of the physical button 125.

If the user confirmation is not received for a predetermined time after the message 601 is displayed, the first controller 151 may control the power supply 160 such that the electronic apparatus 100 is maintained in the same operation state as the operation state before the physical button 125 is manipulated. Specifically, the first controller 151 may control the power supply 160 to shut off the power supply to the elements other than the physical button 125.

When the second controller 152 receives information from the first controller 151 through connection F-4 indicating that it is necessary to change the operation mode of the electronic apparatus 100 from the power saving mode or the power off mode to the normal mode, the second controller 152 may boot or change the operation mode based on a series of commands stored in the system firmware 153 and accessed through connection F-5. The second controller 152 may be for example a central processing unit (CPU).

The power supply 160 supplies power to each element of the electronic apparatus 100 under the control of the first controller 151. Specifically, when the electronic apparatus 100 is in the normal mode, the power supply 160 supplies power to all of the elements of the electronic apparatus 100, and, when the operation mode of the electronic apparatus 100 is the power saving mode, the power supply 160 may shut off the power supply to the elements other than the first controller 151 and the physical button 125 or may shut off the power supply to the elements other than the physical button 125.

FIGS. 4 and 5 are views illustrating detailed shapes of the physical button 125 illustrated in FIG. 2, according to exemplary embodiments of the present general inventive concept.

Referring to FIG. 4, the physical button 125 corresponds to a push button 126. The push button 126 is a button that is operated by being pushed and functions as a switch that closes or opens a circuit when it is pushed. Although the push button 126 protrudes from a case region 127 of the electronic apparatus 100 in the exemplary embodiment of the present general inventive concept illustrated in FIG. 4, an upper protruding region 126a of the push button 126 and the case region 127 of the electronic apparatus 100 may be located on the same plane, or the upper protruding region 126a of the push button 126 may be recessed lower than the case region 127 of the electronic apparatus 100, so that misoperation of the push button 126 can be prevented.

Referring to FIG. 5, the physical button 125 includes a slide button 128. The slide button 128 is a button that is operated by being moved to the left or right by the user, and functions as a switch that closes or opens a circuit when the slide button 128 is moved to the right or left. Although the slide button 128 illustrated in FIG. 5 only enables selection between a first control command and a second control command, a slide button 128 to enable selection of only one control command may be implemented.

FIG. 6 is a view illustrating an example of a user interface window 600 which is displayable on the user interface 120 of FIG. 2.

Referring to FIG. 6, a user interface window 600 displays a message 601 to receive a confirmation on manipulation of the physical button 125.

Such a message 601 informs the user that the physical button 125 has been manipulated but is determined to have been misoperated due to a low ambient illuminance value. The message 601 may further request that the user press a different button (not illustrated) other than the currently pressed physical button 125, to indicate that the manipulation of the physical button 125 was not a misoperation. Although the message 601 requests the user to press a button other than the initially manipulated physical button 125, the message 601 may request a different confirmation, for example that the user touch a touch screen (not illustrated) or manipulate the same physical button 125.

FIG. 7 is a view illustrating illuminance values which are measured according to a location of the electronic apparatus 100. In FIG. 7, the measured illuminance values are divided into illuminance values which are measured at regular time intervals (for example, 0.5 seconds) while the electronic apparatus 100 is moved from a bright environment such as outside to a dark environment such as a bag, illuminance values which are measured at regular time intervals while the electronic apparatus 100 is in the dark environment, illuminance values which are measured at regular time intervals while the electronic apparatus 100 is moved from the dark environment to the bright environment, and illuminance values which are measured at regular time intervals while the electronic apparatus 100 is in the bright environment.

Referring to FIG. 7, it can be seen that the illuminance values converge on about 3 when the electronic apparatus 100 is located in the dark environment such as a bag. Considering this, the electronic apparatus 100 may be determined to be located in the dark environment if the illuminance value measured by the sensor is less than 5.

Also, it can be seen that the illuminance value is changed after being maintained for about 1 second when the electronic apparatus 100 is put into or taken out of the dark environment such as a bag. Considering this, the illuminance value is measured by the sensor 140 for more than 1.2 seconds and it may be determined whether the electronic apparatus 100 is in the dark environment or not using the illuminance value.

Since the numerical values illustrated in FIG. 7 are measured by a specific illuminance sensor 141, different numeral values may be measured if the system uses a different illuminance sensor 141. Therefore, the present general inventive concept is not limited to the above-mentioned numerical values.

FIG. 8 is a flowchart illustrating a controlling method according to an exemplary embodiment of the present general inventive concept.

Referring to FIG. 8, the physical button 125 is manipulated by predetermined manipulation (operation S810). The predetermined manipulation may be manipulation that the user intends to perform, or may be inadvertent manipulation that the user does not intend to perform and occurs due to the movement of the electronic apparatus 100. The physical button 125 may be for example a push button 126 or a slide button 128, and may be for example a power button to receive a power manipulation command, a volume control button to receive a volume control command, a home button to receive a screen display command, or a keyboard button to input text.

When the physical button 125 is manipulated, ambient illuminance is measured (operation S820). Specifically, when the operation mode of the electronic apparatus 100 is the power saving mode (or the power off mode) and the physical button 125 is manipulated, the ambient illuminance is measured using the illuminance sensor 141. The ambient illuminance may be measured for a predetermined time from when the physical button 125 is manipulated. The predetermined time may a time from when the physical button 125 is manipulated to when it is determined whether the manipulation of the physical button 125 is user manipulation or misoperation, or may be set a period of time which is set as a default (for example, _{1.2} seconds or 2 seconds).

The ambient illuminance may be measured when the operation mode of the electronic apparatus 100 is the tablet mode and may not be measured when the operation mode of the electronic apparatus 100 is the desk mode.

It is determined whether the sensed ambient illuminance is greater than or equal to a predetermined illuminance value (operation S830). This determining operation may be performed when the operation mode of the electronic apparatus 100 is the tablet mode and may not be performed when the operation mode of the electronic apparatus 100 is the desk mode.

When it is determined that the sensed ambient illuminance is greater than or equal to the predetermined illuminance value (operation S830-Y) or when a user confirmation is received (operation S860-Y), an operation corresponding to the manipulation of the physical button 125 is performed (operation S840). For example, when the physical button 125 is corresponding to a power button is manipulated in the power saving mode and it is determined that the input of the physical button 125 is user manipulation, the operation mode of the electronic apparatus 100 may be changed to the normal mode. Alternatively, when the physical button 125 corresponds to a volume control button is manipulated in the power saving mode and it is determined that the input of the physical button 125 is user manipulation, an output volume of the electronic apparatus 100 may be adjusted.

On the other hand, when it is determined that the sensed ambient illuminance is less than the predetermined illuminance value (operation S830-N), a message 601 to receive a confirmation on the manipulation of the physical button 125 is displayed (operation S850). Specifically, when the operation mode of the electronic apparatus 100 is the power saving mode and the physical button 125 is manipulated, but it is determined the sensed ambient illuminance is less than the predetermined illuminance value, the message 601 to receive a confirmation on whether the manipulation of the physical button 125 is user manipulation or not may be displayed. The message 601 may be displayed when the physical button 125 is manipulated for a predetermined time and the ambient illuminance measured for the predetermined time continues to be less than the predetermined illuminance value. The message 601 may be displayed only for a predetermined time (for example, 10 seconds). Also, the message 601 may be displayed only in the tablet mode.

A confirmation on the manipulation of the physical button 125 is received from the user after the message 601 is displayed (operation S860). Specifically, a user confirmation command may be received from the user after the message 601 to receive the user confirmation command is displayed. The user confirmation command may be input through a touch screen, may be input through the initially manipulated physical button 125, or may be input through a different button (not illustrated) other than the initially manipulated physical button 125.

If the user confirmation command is not received from the user (operation S860-N), the message displaying operation is stopped, and it is determined that the manipulation of the physical button 125 is misoperation and an operation corresponding to the predetermined manipulation of the physical button 125 is not performed.

Since the controlling method according to the above-described exemplary embodiment of the present general inventive concept verifies whether the manipulation of the physical button 125 is user manipulation or not using the ambient illuminance value, misoperation of the physical button 125 can be prevented. The controlling method of FIG. 8 may be executed in the electronic apparatus 100 having the configuration of FIG. 2 or may be executed in electronic apparatuses 100 having other configurations.

FIG. 9 is a flowchart illustrating a controlling method if a physical button 125 operated by predetermined manipulation is a power button.

For the purposes of the exemplary embodiment illustrated in FIG. 9, it is assumed that the initial operation mode of the electronic apparatus 100 is the power off mode.

Referring to FIG. 9, the physical button 125 is manipulated (operation S905). Specifically, the physical button 125 may be pressed by the user or by an external shock.

The operation of the physical button 125 is sensed (operation S910). Specifically, the first controller 151 may sense that the power button is operated through an NMI pin (not illustrated).

The system of the electronic apparatus 100 is turned on (operation S915). Specifically, the first controller 151 recognizes that the operation mode of the electronic apparatus 100 is the power off mode and controls each element of the electronic apparatus 100 to turn on the system.

A POST process is performed when the system is turned on (operation S930). Specifically, the system performs an entire initializing process and a power on self-test using a firmware (not illustrated). An illuminance sensor 141 is also initialized by such an initializing operation (operation S920).

When the illuminance sensor 141 is initialized, it measures an ambient illuminance value (operation S925). The first controller 151 reads out the measured illuminance value (operation S935) after all POST processes are completed and before the system is booted with an operating system.

The measured illuminance value is compared with a predetermined illuminance value (operation S940). The first controller 151 compares the read-out value from the illuminance sensor 141 and a reference value in order to determine whether the system is turned on by the user or is inadvertently turned on by a misoperation such as an external shock in an enclosed space. The reference value may be a value that is measured while the electronic apparatus 100 is in a dark area such as inside a bag.

If the measured illuminance value is equal to or greater than the predetermined illuminance value (operation S940-N), it is determined that the system is turned on by the user and thus normal booting is performed (operation S945).

It is determined whether a predetermined time (Time_d) has elapsed or not in order to determine whether the system is turned on by misoperation (operation S950). If the predetermined time has not elapsed (operation S950-N), operation S940 is performed again such that the measured illuminance value is compared with the predetermined illuminance value.

If the measured illuminance value continues to be lower than the predetermined illuminance value until the predetermined time has elapsed (operation S950-Y), a user confirming process is performed (operation S955). Specifically, although it is determined that the system is turned on by an external shock in an enclosed space since the illuminance value continues to be lower than the predetermined illuminance value for the predetermined time, a message 601 may be displayed to request that the user confirm whether the manipulation of the physical button 125 was intentional by pressing a button.

The user identifies the displayed message 601. When the user normally presses the physical button 125 while the message 601 is displayed (operation S960-Y), it is determined that the manipulation of the physical button 125 is not misoperation and thus normal booting is performed (operation S945).

It is determined whether an elapsed time is greater than a predetermined timeout value or not after the message 601 is displayed (operation S965). If the elapsed time is not greater than the timeout value (operation S965-N), operation S960 of waiting for the user's confirmation is performed again.

If a desired response is not received before the elapsed time exceeds the timeout value (operation S965-Y), that is, if the user does not press the physical button 125 again, the controller 150 determines that the manipulation of the physical button 125 was a misoperation such as an external shock in an enclosed space and controls the system of the electronic device 100 to turn off (operation S970).

The controlling method according to the above-described exemplary embodiment of the present general inventive concept verifies whether the manipulation of the physical button 125 is user manipulation or not using the ambient illuminance value when the physical button 125 is manipulated, and thus can prevent misoperation of the physical button 125. The controlling method of FIG. 9 may be executed in the electronic apparatus 100 having the configuration of FIG. 2 or may be executed in electronic apparatuses 100 having other configurations.

As discussed, embodiments of the invention provide an electronic apparatus having a plurality of operation modes, the electronic apparatus comprising: a physical button arranged to be manipulated by a predetermined manipulation; a sensor arranged to measure an ambient light level when an operation mode of the electronic apparatus is a power saving mode or a power off mode and the physical button is manipulated; and a controller arranged to perform an operation corresponding to the predetermined manipulation of the physical button when it is determined that the ambient light level measured by the sensor is greater than or equal to a predetermined light level value.

In some embodiments, the controller is arranged to determine that the ambient light level measured by the sensor is greater than or equal to the predetermined light level value by averaging measured ambient light levels over a time period or by using a highest ambient light level measured in a time period.

In some embodiments, the electronic apparatus comprises a user interface arranged to display a message requesting a confirmation of the manipulation of the physical button when it is determined that the ambient light level measured by the sensor is less than the predetermined light level value. In some such embodiments, the user interface is arranged to cancel the display of the message and the controller is arranged to perform the operation corresponding to the predetermined manipulation of the physical button if the ambient light level measured by the sensor becomes greater than or equal to the predetermined light level value. Hence, in such embodiments, a change in the measured ambient light level can cancel the display of the message.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include a semiconductor memory, a read-only memory (ROM), a random-access memory (RAM), a USB memory, a memory card, a Blu-Ray disc, CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

## Claims

1. An electronic apparatus having a plurality of operation modes, the electronic apparatus comprising:
a physical button arranged to be manipulated by a predetermined manipulation;
a sensor arranged to measure an ambient light level when an operation mode of the electronic apparatus is a power saving mode or a power off mode and the physical button is manipulated; and
a controller arranged to perform an operation corresponding to the predetermined manipulation of the physical button when it is determined that the ambient light level measured by the sensor is greater than or equal to a predetermined light level value.

2. The electronic apparatus of claim 1, wherein the controller is arranged to determine that the ambient light level measured by the sensor is greater than or equal to the predetermined light level value by averaging measured ambient light levels over a time period or by using a highest ambient light level measured in a time period.

3. The electronic apparatus of claim 1 or 2, further comprising a user interface arranged to display a message requesting a confirmation of the manipulation of the physical button when it is determined that the ambient light level measured by the sensor is less than the predetermined light level value;
optionally wherein the user interface is arranged to cancel the display of the message and the controller is arranged to perform the operation corresponding to the predetermined manipulation of the physical button if the ambient light level measured by the sensor becomes greater than or equal to the predetermined light level value.

4. The electronic apparatus of claim 3, wherein when the physical button is manipulated for a first predetermined time and it is determined that the ambient light level measured by the sensor for the first predetermined time is less than the predetermined light level value, the controller is arranged to control the user interface to display the message.

5. The electronic apparatus of claim 3 or 4, wherein the user interface is arranged to display the message for a maximum of a second predetermined time, and to cancel the display of the message thereafter.

6. The electronic apparatus of any one of claims 3 to 5, wherein, when a user confirmation command is input after the message is displayed, the controller is arranged to perform the operation corresponding to the predetermined manipulation of the physical button.

7. The electronic apparatus of claim 6, wherein the user confirmation command is input through at least one of the manipulated physical button, a button other than the manipulated physical button, and a touch input of the user interface.

8. The electronic apparatus of any one of claims 1 to 7, wherein, when the operation mode of the electronic apparatus is the power saving mode and the physical button is manipulated, and it is determined that the measured ambient light level is greater than or equal to the predetermined light level value, the controller is arranged to change the operation mode of the electronic apparatus to a normal mode.

9. The electronic apparatus of any one of claims 1 to 8, further comprising:
a plurality of functional elements including the sensor; and
a power supply arranged to supply power to each of the plurality of functional elements,
wherein, when the operation mode of the electronic apparatus is the power off mode and the physical button is manipulated, the controller is arranged to control the power supply to only supply power to the sensor, and
wherein, when it is determined that the measured ambient light level is greater than or equal to the predetermined light level value, the controller is arranged to control the power supply to supply power to all of the functional elements.

10. The electronic apparatus of claim 9, wherein the plurality of functional elements further comprises a user interface, and
wherein, when the physical button is manipulated for a third predetermined time and it is determined that the ambient light level measured by the sensor for the first predetermined time is less than the predetermined light level value, the controller is arranged to control the power supply to supply power to the user interface.

11. The electronic apparatus of claim 9 or 10, wherein, when it is determined that the ambient light level measured by the sensor during a fourth predetermined time after the physical button has been manipulated is less than the predetermined light level value, the controller is arranged to control the operation mode of the electronic apparatus to change to the power off mode.

12. The electronic apparatus of any one of claims 1 to 11, wherein the physical button is at least one of a power button to receive a power manipulation command, a volume control button to receive a volume control command, a home button to receive a screen display command, and a keyboard button to input text.

13. The electronic apparatus of any one of claims 1 to 12, wherein the electronic apparatus is connectable with a docking apparatus,
wherein, when the electronic apparatus is connected with the docking apparatus and the physical button is manipulated, the controller is arranged to control the sensor not to measure ambient light level and to directly perform the operation corresponding to the predetermined manipulation of the physical button.

14. A method of controlling an electronic apparatus having a plurality of operation modes, the method comprising:
manipulating a physical button by a predetermined manipulation when an operation mode of the electronic apparatus is a power saving mode or a power off mode;
measuring ambient light level when the physical button is manipulated; and
performing an operation corresponding to the predetermined manipulation of the physical button when it is determined that the measured ambient light level is greater than or equal to a predetermined light level value.

15. The method of claim 14, further comprising:
displaying a message to receive a confirmation on the manipulation of the physical button when it is determined that the measured ambient light level is less than the predetermined light level value;
optionally wherein displaying the message comprises: displaying the message when the physical button is manipulated for a first predetermined time and it is determined that the ambient light level measured for the first predetermined time is less than the predetermined light level value.
